# EUROPÄISCHE PATENTSCHRIFT

(11) **EP 0 513 581 B1**
(45) Veröffentlichungstag und Bekanntmachung des Hinweises auf die Patenterteilung: **10.12.1997**
(21) Anmeldenummer: 92107077.7
(22) Anmeldetag: 25.04.1992
(51) Int. Cl.: G06F 13/42

(54) **Schaltungsanordnung für bidirektionalen Datentransfer**
Circuit arrangement for bidirectional data transfer
Dispositif de circuit pour transfert de données bidirectionnel

(30) Priorität: 10.05.1991 DE 4115331
(43) Veröffentlichungstag der Anmeldung: 19.11.1992
(73) Patentinhaber: ROBERT BOSCH GMBH, 70442 Stuttgart (DE)
(72) Erfinder: Magnus, Jürgen, Dipl.-Ing., W-7153 Weissach i.T.-Heutensbach (DE)

(56) Entgegenhaltungen:
- FR-A- 2 635 934
- US-A- 3 713 096
- US-A- 3 781 815
- US-A- 3 879 710

## Beschreibung

Die vorliegende Erfindung betrifft eine Schaltungsanordnung für bidirektionalen Datentransfer mit den Merkmalen des Oberbegriffs des Anspruchs 1.

Aus der Zeitschrift ,,Elektronic, 23/16.11.1984, Seiten 91 bis 94, ist ein Bussystem bekannt, das verschiedene Rechner mit verschiedenen Betriebssystemen miteinander verbindet. Es handelt sich hierbei um ein serielles Bussystem, bei dem der Datentransfer zwischen den einzelnen Rechnern in beiden Richtungen auf einer Leitung stattfindet.

Solange es sich um kleine Entfernungen zwischen den Daten austauschenden Einrichtungen handelt, ist ein solches serielles Bussystem von Vorteil. Sind aber große Entfernungen zwischen den einzelnen Einrichtungen zu überbrücken, kommt man nicht mehr ohne Treiberschaltungen auf der Busleitung aus. Beispielsweise bei der Überwachung von Richtfunkgeräten bestehen zwischen der Überwachungseinrichtung und den einzelnen auf ihre Funktion hin zu überprüfenden Geräten in der Regel so große Entfernungen, daß ein Bussystem, an das die Überwachungseinrichtung und die Geräte angeschlossen sind, nicht ohne Treiber auskommt. In einem Bussystem, das eine Leitung für den Datentransfer in zwei Richtungen aufweist, können Treiber aber nicht eingesetzt werden, so daß ein solches Bussystem nicht für die Fernüberwachung geeignet ist.

Aus den Dokumenten FR-A-2 635 934 und US-A 3 781 815 sind als Ringleitungen ausgeführte Bussysteme bekannt, auf denen Daten nur in einer Richtung übertragen werden. Gemäß US-A-3 781 815 enthält jedes an die Ringleitung angeschlossene Gerät einen Synchronwort-Generator. Während ein Gerät Informations-Daten empfängt, sendet es gleichzeitig Synchronworte aus, welche über die Ringleitung an die nachfolgenden Geräte übertragen werden. Ein empfangenes Synchronwort signalisiert dem jeweiligen Gerät, daß es nun Informations-Daten an andere Geräte aussenden darf. Die Synchronworte stellen jeweils eine Kombination von Bits dar, welche bei den Informations-Daten nicht vorkommen, und sie haben die Funktion, die Sende- und Empfangsphasen der einzelnen Geräte in dem Bussystem zu ordnen.

Der Erfindung liegt die Aufgabe zugrunde, eine Schaltungsanordnung der eingangs genannten Art anzugeben, die ein Bussystem besitzt, das für die Überwachung weit entfernt angeordneter Geräte geeignet ist.

Erfindungsgemäß wird diese Aufgabe durch die Merkmale des Anspruchs 1 gelöst. Vorteilhafte Ausbildungen der Erfindung gehen aus den Unteransprüchen hervor.

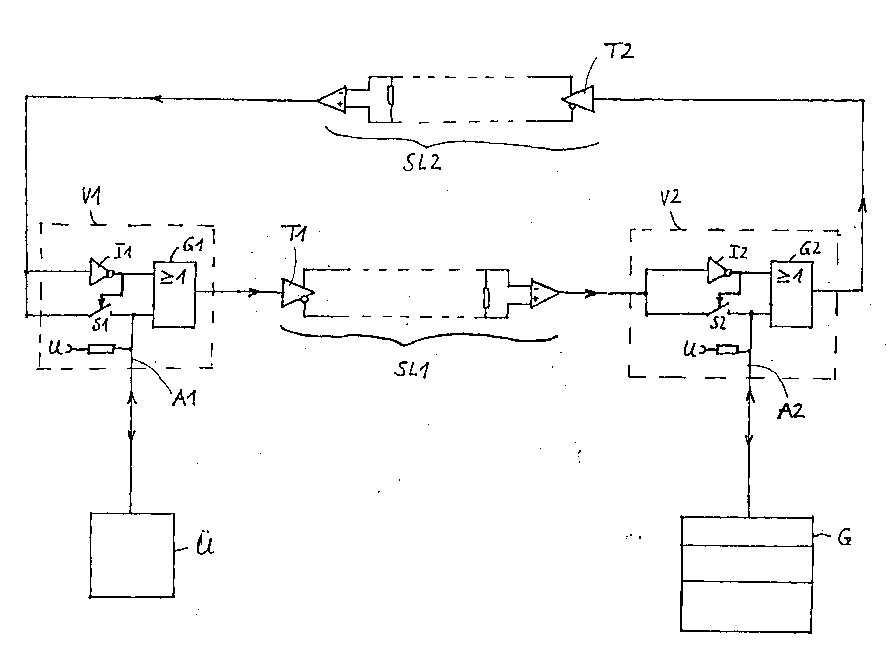

Anhand eines in der Zeichnung dargestellten Ausführungsbeispiels wird nun die Erfindung näher erläutert.

Die Figur der Zeichnung zeigt ein als Ringleitung ausgebildetes Bussystem, an die über Verzweigungsschaltungen V1 und V2 eine Überwachungseinrichtung Ü und eine Reihe von Geräten G angeschlossen sind, deren Funktion von Zeit zu Zeit zu überprüfen ist.

Die Überwachungseinrichtung Ü besitzt zum Beispiel eine Eingabevorrichtung, mit der die Adresse des jeweils zu überprüfenden Gerätes ausgewählt werden kann. Das Adressierungssignal gelangt über die Verzweigungsschaltung V1 in die Ringleitung und wird von der nächsten Verzweigungsschaltung V2 an die an ihre Abzweigung A2 angeschlossenen Geräte G weitergegeben. Das Gerät mit der zutreffenden Adresse gibt dann seine Funktionsdaten ab, welche von der Verzweigungsschaltung V2 in die Ringleitung eingekoppelt und von der anderen Verzweigungsschaltung V1 der an ihre Abzweigung A1 angeschlossenen Überwachungseinrichtung Ü zugeführt werden. Diese vom Gerät abgegebenen Funktionsdaten können zum Beispiel auf einem Bildschirm oder einer sonstigen Anzeigevorrichtung der Überwachungseinrichtung Ü dargestellt werden.

In dem dargestellten Bussystem befinden sich nur zwei Verzweigungsschaltungen V1 und V2, eine für die Überwachungseinrichtung Ü und eine für einen Satz von Geräten G. Es können aber noch mehrere Verzweigungsschaltungen in die Ringleitung eingefügt werden, wenn weitere entfernt voneinander angeordnete Geräte zu überwachen sind.

Die weiter unten noch näher beschriebenen Verzweigungsschaltungen V1 und V2 sind so konzipiert, daß die zwischen der Überwachungseinrichtung Ü und den Geräten G ausgetauschten Daten auf der Ringleitung in nur einer Richtung übertragen werden. Dann ist es nämlich möglich, in den Leitungsabschnitten zwischen den Verzweigungsschaltungen V1, V2 Treiber T1, T2 einzusetzen.

In dem dargestellten Ausführungsbeispiel sind die Leitungsabschnitte der Ringleitung zwischen den Verzweigungsschaltungen V1, V2 als symmetrische Leitungen SL1 und SL2 ausgebildet, weil sich dadurch die Störsicherheit erhöht. Dies ist aber keine zwingende Maßnahme.

Die Verzweigungsschaltungen V1 und V2 sind identisch aufgebaut. Jede von ihnen weist ein ODER-Gatter G1, G2 auf. Einem von zwei Eingängen des ODER-Gatters G1, G2 ist ein Inverter I1, I2 vorgeschaltet, dem die über die Ringleitung ankommenden Daten zugeführt werden. An den anderen Eingang des ODER-Gatters G1, G2 ist ein Schalter S1, S2 angeschlossen, dem ebenfalls die über die Ringleitung ankommenden Daten zugeführt sind. Dieser Eingang, mit dem auch die Abzweigung A1, A2 zu der Überwachungseinrichtung Ü bzw. den Geräten G verbunden ist, liegt an einem Potential U.

Das Potential U stellt einen von zwei in den Datensignalen vorkommenden Bitwert dar. Es ist im hier beschriebenen Ausführungsbeispiel die logische "1". Die Verzweigungsschaltungen V1, V2 sorgen also dafür, daß sowohl in ihren Abzweigungen A1, A2 als auch auf der Ringleitung im Ruhezustand, d.h. wenn kein Datentransfer stattfindet oder in einem Datensignal gerade eine logische "1" übertragen wird, die logische "1" anliegt. Wenn das der Fall ist, ist der Schalter S1, S2 geöffnet. Er wird nämlich durch das Ausgangssignal des Inverters I1, I2 gesteuert und wird erst geschlossen, wenn das Ausgangssignal des Inverters I1, I2 eine logische "1" ist. Eine logische "1" am Ausgang des Inverters I1, I2 stellt sich nur dann ein, wenn an seinem Eingang ein Bit mit einer logischen "0" anliegt. Die Folge ist, daß das dem geschlossenen Schalter S1, S2 zugeführte Bit mit der logischen "0" in die Abzweigung A1, A2 gelangt und darüber zur Überwachungseinrichtung Ü bzw. zu den Geräten G.

Wird von der Überwachungsvorrichtung Ü bzw. einem der Geräte G an die Abzweigung A1, A2 der Verzweigungseinrichtung V1, V2 ein Bit mit der logischen "0" abgegeben, so wird dieses Bit durch das Zusammenwirken der ODER-Gatter G1, G2, der Inverter I1, I2 und der von den Invertern gesteuerten Schalter S1, S2 immer an den am Ausgang des jeweiligen ODER-Gatters G1, G2 angeschlossenen Leitungsabschnitt SL1, SL2 übergeben. Damit ist gewährleistet, daß die Datenübertragung auf der Ringleitung immer nur in einer Richtung erfolgt.

## Patentansprüche

1. Schaltungsanordnung für den bidirektionalen Transfer von Daten zwischen einer Überwachungseinrichtung und einem oder mehreren davon entfernt angeordneten Geräten mit Hilfe eines Bussystems, wobei das Bussystem als Ringleitung ausgebildet ist, in der die Daten nur in einer Richtung übertragen werden, und die Überwachungseinrichtung (Ü) und die zu überwachenden Geräte (G) über Verzweigungsschaltungen (V1, 2) an die Ringleitung angeschlossen sind, dadurch gekennzeichnet, daß jede Verzweigungsschaltung (V1, V2) so konzipiert ist, daß sie die Ringleitung und ihre zu der Überwachungseinrichtung (Ü) beziehungsweise zu einem Gerät (G) führende Abzweigung (A1, A2) auf ein Potential (U), das einen von zwei in den Datensignalen vorkommenden Bitwerten darstellt, legt, wenn die Verzweigungsschaltung nicht an einem Datentransfer beteiligt ist oder bei einem Datentransfer gerade dieser Bitwert vorkommt und daß dann, wenn im Rahmen eines Datentansfers der andere der zwei möglichen Bitwerte zu übertragen ist, diejenige Verzweigungsschaltung (V1, V2), an deren Abzweigung ein zu übertragendes Datensignal anliegt, diesen Bitwert auf die Ringleitung und jede andere Verzweigungsschaltung (V1, V2) diesen Bitwert von der Ringleitung an ihre Abzweigung durchschaltet.

2. Schaltungsanordnung nach Anspruch 1, dadurch gekennzeichnet, daß jede Verzweigungsschaltung (V1, V2) ein ODER-Gatter (G1, G2) aufweist, daß einem von zwei Eingängen des ODER-Gatters (G1, G2) ein Inverter (I1, I2) vorgeschaltet ist, dem die über die Ringleitung ankommenden Daten zugeführt sind, daß an den anderen Eingang des ODER-Gatters (G1, G2) ein Schalter (S1, S2) angeschlossen ist, dem ebenfalls die über die Ringleitung ankommenden Daten zugeführt sind, und daß der Schalter (S1, S2) nur dann schließt, wenn über die Ringleitung ein Bitwert zugeführt wird, der nicht dem Bitwert im Ruhezustand entspricht.

3. Schaltungsanordnung nach Anspruch 2, dadurch gekennzeichnet, daß das Ausgangssignal des Inverters (I1, I2) den Schalter (S1, S2) steuert.

4. Schaltungsanordnung nach Anspruch 1, dadurch gekennzeichnet, daß die zwischen den einzelnen Verzweigungsschaltungen (V1, V2) befindlichen Leitungsabschnitte der Ringleitung als symmetrische Leitungen (SL1, SL2) ausgebildet sind.

## Claims

1. Circuit arrangement for bidirectional data transfer of data between a monitoring device and one or more units arranged at a distance from it, with the aid of a bus system, the bus system being designed as a ring line in which the data are transmitted in only one direction, and the monitoring device (Ü) and the units (G) to be monitored being connected to the ring line via spur circuits (V1, 2) characterized in that each spur circuit (V1, V2) is designed such that it keeps the ring line and its spur (A1, A2), leading to the monitoring device (Ü) or to a unit (G) at a potential (U) which represents one of two bit values which occur in the data signals when the spur circuit is not involved with a data transfer or this bit value actually occurs during a data transfer and in that, when the other of the two possible bit values is to be transmitted in the course of a data transfer, that spur circuit (V1, V2) on whose spur a data signal to be transmitted is present passes this bit value through to the ring line, and every other spur circuit (V1, V2) passes this bit value through from the ring line to its spur.

2. Circuit arrangement according to Claim 1, characterized in that each spur circuit (V1, V2) has an OR gate (G1, G2), in that one of two inputs of the OR gate (G1, G2) has an invertor (I1, I2) upstream of it to which the data arriving via the ring line are supplied, in that the other input of the OR gate (G1, G2) has a switch (S1, S2) connected to it, to which the data arriving via the ring line are likewise supplied, and in that the switch (S1, S2) closes only when a bit value which does not correspond to the bit value in the quiescent state is supplied via the ring line.

3. Circuit arrangement according to Claim 2, characterized in that the output signal of the invertor (I1, I2) controls the switch (S1, S2)

4. Circuit arrangement according to Claim 1, characterized in that the line sections of the ring line located between the individual spur circuits (V1, V2) are designed as balanced lines (SL1, SL2).

## Revendications

1. Circuit de transfert bidirectionnel de données entre une installation de surveillance et un ou plusieurs appareils éloignés de celle-ci, à l'aide d'un système de bus en anneau, qui transmet les données dans une seule direction, l'installation de surveillance (Ü) et les appareils à surveiller (G) étant reliés à la ligne en anneau par des circuits de dérivation (V1, V2),
caractérisé en ce que
chaque circuit de dérivation (V1, V2) est conçu pour mettre la ligne en anneau et les lignes de dérivation (A1, A2) reliées à l'installation de surveillance (Ü) ou à un appareil (G), à un potentiel (U) qui représente l'un des états de bit des signaux de données, lorsque le circuit de dérivation ne participe pas à un transfert de données ou si cet état de bits se produit précisément pour ce transfert de données, et si dans le cadre d'un transfert de données l'autre des deux états de bits possible est transmis, celui des circuits de dérivation (V1, V2) dont la ligne de dérivation reçoit un signal de données à transmettre, fait passer cette valeur de bits à la ligne en anneau et chaque autre circuit de dérivation (V1, V2) laisse passer cet état de bits de la ligne en anneau vers sa ligne de dérivation.

2. Circuit selon la revendication 1,
caractérisé en ce que
chaque circuit de circulation (V1, V2) comporte une porte OU (G1, G2) dont l'une des deux entrée est précédée d'un inverseur (I1, I2) recevant les données arrivant de la ligne en anneau, et l'autre entrée des portes OU (G1, G2) est reliée à un interrupteur (S1, S2) qui reçoit également les données arrivant de la ligne en anneau et l'interrupteur (S1, S2 ) ne se ferme que pour un état de bits venant de la ligne en anneau qui ne correspond pas à l'état de bits de la position de repos.

3. Circuit selon la revendication 2,
caractérisé en ce que
le signal de sortie de l'inverseur (I1, I2) commande l'interrupteur (S1, S2).

4. Circuit selon la revendication 1,
caractérisé en ce que
les segments de la ligne en anneau qui se trouvent entre les différents circuits de dérivation (V1, V2) sont des lignes symétriques (SL1, SL2).
